# EUROPÄISCHE PATENTANMELDUNG

(11) **EP 1 637 774 A1**
(43) Veröffentlichungstag der Anmeldung: **22.03.2006**
(21) Anmeldenummer: 04405579.6
(22) Anmeldetag: 15.09.2004
(51) Int. Cl.: F16H 25/24, B23Q 5/40

(54) **Lagervorrichtung für einen Wälzschraubtrieb**

(71) Anmelder: IBC Industrial Bearings + Components AG, 2540 Grenchen (CH)
(72) Erfinder: Gorr, Helmut, 35581 Wetzlar (DE)
(74) Vertreter: Groner, Manfred

(57) **Zusammenfassung**

Die Lagervorrichtung weist Mittel zum Schmieren der Wälzschraubtriebmutter (M) auf. In einem Gehäuse (1) ist ein an die Wälzschraubtriebmutter (M) anzuschliessender und eine Spindel (S) aufnehmender Adapter (2) drehbar gelagert. Es ist ein Schmierkanal (K) vorgesehen, der von wenigstens einem Schmieranschluss (15) am Gehäuse (1) durch die Trennebene zwischen Gehäuse (1) und Adapter (2) zu einem an die Wälzschraubtriebmutter (M) anzuschliessenden Schmierausgang (38) führt. Bei drehender Wälzschraubtriebmutter (M) kann diese über den Adapter (2) ohne Unterbruch geschmiert werden.

## Beschreibung

Die Erfindung betrifft eine Lagervorrichtung für einen Wälzschraubtrieb, mit Mitteln zum Schmieren der Wälzschraubtriebmutter.

Bekannte Wälzschraubtriebe bestehen aus einer Spindel, einer Wälzschraubtriebmutter und einer Anzahl von Wälzkörpern, die zwischen der Spindel und der Wälzschraubtriebmutter angeordnet sind. Als Wälzkörper können sowohl Rollen als auch Kugeln eingesetzt werden. Bekannt sind auch verschiedene Lager- und Lagereinheiten für die Endlagerung der drehenden Spindel. Zudem sind Lager- und Lagereinheiten für die Lagerung drehender Wälzschraubtriebmuttern bekannt. Bei Wälzschraubtrieben ist die Schmierung wesentlich, um einen verfrühten Ausfall zu verhindern. Die Schmierung ist insbesondere bei Wälzschraubtrieben mit drehender Wälzschraubtriebmutter und somit bei stehender Spindel aufwändig und bisher nicht funktionssicher gelöst worden. Zum Schmieren eines Wälzschraubtriebes mit drehender Wälzschraubtriebmutter sind bisher folgende Massnahmen bekannt geworden:

Bei einer bekannten Ausführung erfolgt die Schmierung über eine Anbohrung der Spindel. Die Wälzschraubtriebmutter wird in gewissen Zyklen in eine Schmierposition gefahren und geschmiert. Nachteilig ist bei dieser Ausführung, dass bei langen Spindeln die Herstellung des Schmierkanals sehr aufwendig ist. Nachteilig ist zudem, dass vor allem bei Werkzeugmaschinen die Unterbrechung einer Bearbeitung zu unproduktiven Zeiten führt.

Bekannt sind auch Drehdurchführungen, die aber nachteilig sind, da sie den Bauraum wesentlich vergrössern. Zudem ist die Entwicklung und Montage einzelner Bauteile für Drehdurchführungen aufwändig.

Der Erfindung liegt die Aufgabe zugrunde, die genannten Nachteile zu vermeiden und somit eine einfachere und trotzdem zuverlässige Schmierung eines Wälzschraubtriebes und insbesondere eines solchen mit drehender Wälzschraubtriebmutter und stehender Spindel zu gewährleisten.

Die Aufgabe ist mit einer Lagervorrichtung gelöst, bei welcher in einem Gehäuse ein an die Wälzschraubtriebmutter anschliessend und die Wälzschraubtriebmutter aufnehmender Adapter drehbar gelagert ist und ein Schmierkanal vorgesehen ist, der von einem Schmieranschluss am Gehäuse durch die Trennebene zwischen Gehäuse und Adapter zu einem an die Wälzschraubtriebmutter anzuschliessenden Schmierausgang führt.

Bei der erfindungsgemässen Lagervorrichtung wird das Schmiermittel vom Gehäuse zum Adapter und schliesslich zur Wälzschraubtriebmutter geführt. Diese Lagervorrichtung ist als einbaufertige Einheit sehr montagefreundlich und ermöglicht eine Direktschmierung eines Wälzschraubtriebes mit drehender Wälzschraubtriebmutter und stehender Spindel. Externe Drehdurchführungen sind nicht erforderlich, was wesentliche Kosteneinsparungen ermöglicht. Vorteilhaft ist auch, dass der Bauraum nicht vergrössert werden muss. Die Lagereinheit kann sowohl auf einer langen Hülse einer Einzel- oder Doppelwälzschraubtriebmutter oder vor dieser auf einem kurzen Zentriersitz befestigt werden.

Nach einer Weiterbildung der Erfindung ist vorgesehen, dass der Adapter mit einem Wälzlager im Gehäuse gelagert ist. Hierbei ist insbesondere vorgesehen, dass der Schmierkanal getrennt von der Lagerschmierung des Wälzlagers durch die Trennebene zwischen Gehäuse und Adapter geführt ist. Dies ermöglicht eine getrennte Schmierung der Lagerung des Adapters und der Wälzschraubtriebmutter bzw. der Spindel. Es können somit Schmierstoffe mit unterschiedlichen Eigenschaften eingesetzt werden. Zudem besteht die Möglichkeit, an die Schmierung einen Ölkühlkreislauf anzuschliessen, um die Lagertemperatur und damit die Ausdehnung zu reduzieren.

Nach einer Weiterbildung der Erfindung ist vorgesehen, dass das Wälzlager Zwischenringe aufweist, durch welche das Schmiermittel vom Gehäuse zum Adapter hindurchgeführt wird. Solche Zwischenringe ermöglichen eine sichere Hindurchführung des Schmiermittels und gleichzeitig ein Vorspannen des Lagers. Die Vorspannung ist dann besonders einfach und sicher, wenn gemäss einer Weiterbildung der Erfindung das Lager mit einer Präzisionsspannmutter auf dem Adapter vorgespannt ist.

Ausser der Herstellung der Mitschmiermöglichkeit der Wälzschraubtriebmutter ist auch ihre axiale Steife, vorgespannte Lagerung an sich wesentlich, zumal übliche Drehdurchführungen nicht zur Aufnahme von grossen Axiallasten geeignet sind. Hierbei ist die Anordnung der Lager flexibel. Insbesondere ist bei einer vertikalen Anordnung auch eine asymmetrische Lageranordnung möglich, um in der Hauptlastrichtung eine verstärkte Kapazität bzw. Tragfähigkeit zu erzielen.

Nach einer Weiterbildung der Erfindung weist der Schmierkanal an der Stirnseite des Adapters einen Ausgang auf, der an einen entsprechenden Eingang eines Schmierkanals der Wälzschraubtriebmutter anschliessbar ist. Anstelle dieser axialen Durchführung ist auch eine radiale Durchführung des Schmierkanals zur Wälzschraubtriebmutter möglich.

Nach einer Weiterbildung der Erfindung ist im Gehäuse ein separater Schmierkanal zur Schmierung des zwischen dem Gehäuse und dem Adapter angeordneten Wälzlagers vorgesehen. Dieser Schmierkanal kann einen oder mehrere Aus- und Eingänge aufweisen und ermöglicht insbesondere den Anschluss an einen Ölkühlkreislauf, um die Lagertemperatur und damit die Ausdehnung der Lagervorrichtung wesentlich zu verkleinern. Vorzugsweise erfolgt hier der Durchgang zu den Lagerelementen über Ausnehmungen bzw. Lücken zwischen Zwischenringen. Diese Zwischenringe ermöglichen eine Vorspannung und dennoch einen geeigneten Durchgang für das Schmiermittel bzw. das Öl.

Weitere vorteilhafte Merkmale ergeben sich aus den abhängigen Patentansprüchen, der nachfolgenden Beschreibung sowie der Zeichnung.

Ausführungsbeispiel der Erfindung werden nachfolgend anhand der Zeichnung näher erläutert. Es zeigen:
- Fig. 1: einen Schnitt durch eine erfindungsgemässe Lagervor-richtung entlang der Linie I-I der Fig. 1,
- Fig. 2: einen Schnitt durch eine erfindungsgemässe Lagervorrichtung entlang der Linie II-II der Fig. 4, wobei hier die Lagerelemente anders angeordnet sind als in Fig. 1,
- Fig. 3: einen Schnitt durch eine Lagervorrichtung entlang der Linie III-III der Fig. 4 und
- Fig. 4: eine Frontansicht der Lagervorrichtung.

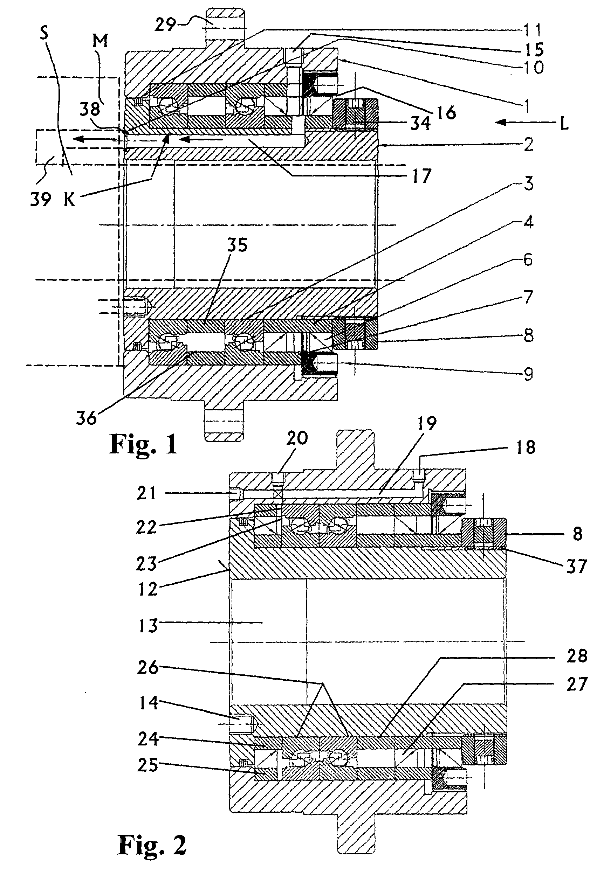

Die in Fig. 1 gezeigte Lagervorrichtung L bildet eine Einheit aus einem Gehäuse 1, einem Adapter 2 und einem Wälzlager 3. Der Adapter 2 besitzt einen Durchgang 13 zur Aufnahme einer in Fig. 1 lediglich angedeuteten Mutter M eines Wälzschraubtriebes. Auf der Spindel S sitzt wenigstens eine ebenfalls lediglich mit gestrichelten Linien angedeutete Wälzschraubtriebmutter M, welche drehsicher mit dem Adapter 2 zu verbinden ist, wozu im Adapter an einer Stirnseite 12 ein oder mehrere Gewindebohrungen 14 vorgesehen sind. Die Spindel S und die Wälzschraubtriebmutter M können an sich beliebig ausgebildet sein.

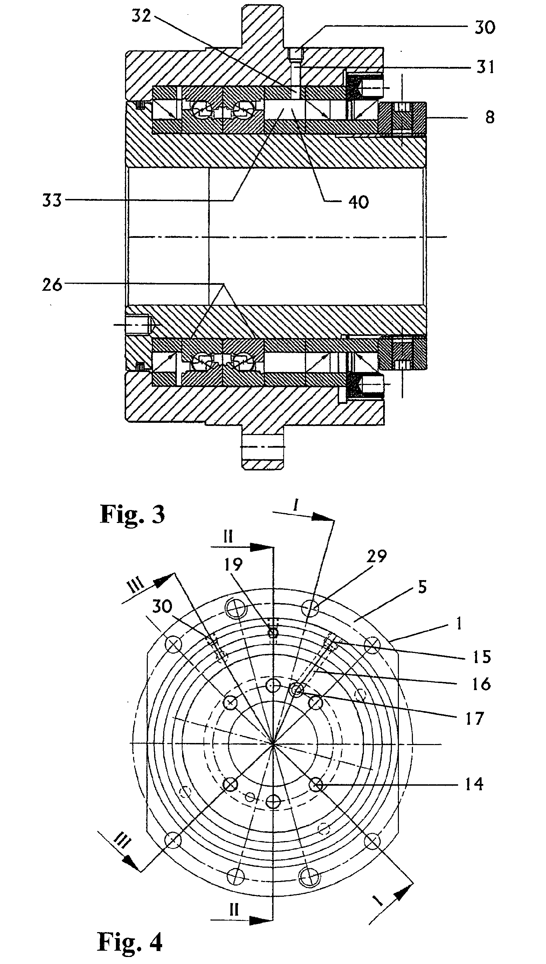

Das Gehäuse 1 weist aussenseitig einen Flansch 5 auf, der gemäss Fig. 4 mehrere axiale Bohrungen 29 zur Befestigung des Gehäuses 1 an einem hier nicht gezeigten Träger oder Gestell aufweist. An der Innenseite des Gehäuses 1 ist das Wälzlager 3 angeordnet. Dieses ist auf dem Adapter 2 vorgespannt und besitzt zwei Wälzlagereinheiten 26, die an sich beliebig ausgebildet sein können. Es sind hier auch weitere Wälzlagereinheiten möglich. Die Wälzlagereinheiten 26 bestehen üblicherweise jeweils aus Kugeln oder Rollen, Käfigen und Ringen. Bei der Ausführung gemäss Fig. 1 sind zwischen den beiden Wälzlagereinheiten 26 ein innerer Zwischenring 35 und ein äusserer Zwischenring 36 angeordnet. Bei der Ausführung gemäss den Fig. 2 und 3 sind die beiden Wälzlagereinheiten 26 aneinander angelegt. Bei der Ausführung nach Fig. 1 sind weitere Zwischenringe 4 und 7, Radialwellendichtringe 6 sowie eine Spannmutter 8 vorgesehen. Die Spannmutter 8 ist vorzugsweise eine Präzisionsspannmutter, die auf ein Aussengewinde 37 des Adapters 2 aufgeschraubt ist und die mit radialen Klemmschrauben 34 festgelegt ist. Mit dieser Spannmutter 8 ist das Wälzlager 3 auf dem Adapter 2 vorgespannt. In das Gehäuse 1 ist über der Spannmutter 8 eine Dichtringmutter 9 eingeschraubt. Diese liegt wie ersichtlich stirnseitig am äusseren Zwischenring 7 an. In der Nähe der Stirnseite 12 sind Lamellenringe 11 angeordnet, welche das Gehäuse 1 und den Adapter 2 gegeneinander abdichten.

Das Wälzlager 3 ist wie erwähnt auf dem Adapter 2 mittels der Spannmutter 8 vorgespannt. Dadurch ist es möglich, die Vorspannung entsprechend den Anforderungen an die Steifigkeit und Drehzahl präzis zu wählen. Der Adapter 2 kann ausser der gezeigten Ausführung hier nicht gezeigte Aufnahmen zum Antrieb aufweisen, solche Aufnahmen sind beispielsweise als Zahnriemenscheiben, Kettenräder oder als Flansch für einen Direktantrieb durch einen hier nicht gezeigten Motor ausgebildet. Der Adapter 2 kann somit direkt von einem Motor angetrieben werden. Entsprechend wird die Wälzschraubtriebmutter M gedreht.

Zur Schmierung der Wälzschraubtriebmutter M bzw. der Spindel S ist ein Schmierkanal K vorgesehen, der gemäss Fig. 1 und 4 am Gehäuse 1 einen Schmieranschluss 15 und an der Stirnseite 12 des Adapters 2 einen Ausgang 38 mit einem O-Ring 10 aufweist. Der Schmierkanal K kann alternativ auch einen radialen Ausgang aufweisen. Der Schmieranschluss 15 führt über einen radialen Durchgang 16 zu einer axialen Bohrung 17 des Adapters 2. Der radiale Durchgang 16 führt durch Lücken und Bohrungen der Zwischenringe 4 und 7 hindurch. Die Radialwellendichtringe 6 dichten diesen Durchgang 16 nach aussen ab. Grundsätzlich können auch mehrere solche Schmierkanäle K vorgesehen sein. Der Ausgang 38 ist mit dem O-Ring 10 dicht an einen in Fig. 1 lediglich angedeuteten Kanal 39 der Wälzschraubtriebmutter M angeschlossen. Am Schmieranschluss 15 zugeführtes Schmiermittel gelangt bei entsprechender Drehstellung des Adapters 2 durch den Durchgang 16 in die Bohrung und durch diese zum Ausgang 38 und schliesslich durch den Kanal 39 zu den Wälzkörpern des Wälzschraubtriebes. Der Schmierkanal mit dem Schmieranschluss 15, dem Durchgang 16 und der Bohrung 17 dient somit der Mutterschmierung des Kugelgewindetriebes. Der Wälzschraubtrieb kann damit kontinuierlich mit dem geeigneten Schmiermittel versehen werden. Die beiden Wälzelemente 26 sind hier von dieser Schmierung nicht betroffen und müssen somit separat geschmiert werden. Hierbei ist auch eine Lebensdauerfettschmierung oder eine andere geeignete Schmierung möglich. Denkbar ist hier jedoch auch eine Ausführung, dass über den Kanal K die beiden Wälzlagereinheiten 26 gleichzeitig geschmiert werden. Hierzu ist es lediglich erforderlich, die interne Dichtung zu den Wälzlagereinheiten 26 wegzulassen.

Bei der Ausführung gemäss den Fig. 2 und 3 werden die beiden Wälzlagereinheiten 26 getrennt geschmiert. Hierzu sind im Gehäuse 2 aussenseitig zwei Schmieranschlüsse 18 und 20 sowie an der Stirnseite 12 ein Anschluss 21 für die Zuführung bzw. Wegführung eines geeigneten Schmierstoffs oder Öls vorgesehen. Diese Anschlüsse sind über einen axialen Kanal 19 miteinander verbunden. Das Schmiermittel bzw. Öl gelangt vom Kanal 19 über einen radialen Durchgang 22, der zwischen einem äusseren Zwischenring 25 und Wälzlagereinheiten 26 verläuft, zu den Wälzlagereinheiten 26. Der Anschluss 18, die Bohrung 19 und die Anschlüsse 20 und 21 bilden einen Schmierkanal, der durch den Durchgang 22 zum linken Lager führt. Die Anschlüsse 20 und 21 sind alternative Einlässe oder werden im Fall des Einlasses über den Anschluss 18 jeweils mit einem hier nicht gezeigten Stopfen verschlossen. Der Schmierstoff kann über den Schmieranschluss 30 austreten und im Fall von Öl gekühlt und/oder filtriert werden. Denkbar ist auch ein umgekehrter Schmiermittelfluss. Das Schmiermittel kann somit beim Schmieranschluss 30 ein- und bei den Anschlüssen 18, 20 oder 21 austreten. Ein Radialwellendichtring 23 ist zwischen den Zwischenringen 24 und 25 angeordnet und verhindert einen seitlichen Austritt des Schmiermittels bzw. Öls. Das Schmiermittel bzw. Öl gelangt schliesslich in einen Zwischenraum 23, der durch zwei Zwischenringe gebildet wird und der axial nach aussen mit einem Radialwellendichtring 40 abgedichtet ist. Wie die Fig. 3 zeigt, ist der Zwischenraum 33 über einen radialen Durchgang 32 mit einer radialen Bohrung 31 des Gehäuses 2 mit einem Schmieranschluss 30 verbunden. Dieser Anschluss 30 kann wahlweise für den Ausgang oder den Eingang des Schmiermittels bzw. Öls verwendet werden. Die beiden Wälzlagereinheiten 26 werden hier somit im Durchlauf geschmiert.

### Bezugszeichenliste

- 1: Gehäuse
- 2: Adapter
- 3: Wälzlager
- 4: Zwischenring innen
- 5: Flansch
- 6: Radialwellendichtringe
- 7: Zwischenring aussen
- 8: Spannmutter
- 9: Dichtringmutter
- 10: O-Ring
- 11: Lamellenringe
- 12: Stirnseite
- 13: Durchgang
- 14: Gewindebohrung
- 15: Schmieranschluss
- 16: Durchgang
- 17: Bohrung
- 18: Anschluss
- 19: Bohrung
- 20: Anschluss
- 21: Anschluss
- 22: Durchgang
- 23: Radialwellendichtring
- 24: Zwischenring
- 25: Zwischenring
- 26: Wälzlagereinheit
- 27: Radialwellendichtring
- 28: Zwischenring
- 29: Flanschbohrung
- 30: Schmieranschluss
- 31: Durchgang
- 32: Bohrung
- 33: Zwischenraum
- 34: Klemmschraube
- 35: Zwischenraum innen
- 36: Zwischenraum aussen
- 37: Gewinde
- 38: Ausgang
- 39: Kanal
- 40: Radialwellendichtring
- K: Schmierkanal
- L: Lagervorrichtung
- M: Wälzschraubtriebmutter
- S: Spindel

## Patentansprüche

1. Lagervorrichtung für einen Wälzschraubtrieb, mit Mitteln zum Schmieren der Wälzschraubtriebmutter (M), **dadurch gekennzeichnet, dass** in einem Gehäuse (1) ein an die Wälzschraubtriebmutter (M) anzuschliessender und die Wälzschraubtriebmutter (5) aufnehmender Adapter (2) drehbar gelagert ist, und dass ein Schmierkanal (K) vorgesehen ist, der von wenigstens einem Schmieranschluss (15) am Gehäuse (1) durch die Trennebene zwischen Gehäuse (1) und Adapter (2) zu einem an die Wälzschraubtriebmutter (M) anzuschliessenden Schmierausgang (38) führt.

2. Lagervorrichtung nach Anspruch 1, **dadurch gekennzeichnet, dass** der Adapter (2) mit einem Wälzlager (3) im Gehäuse (1) gelagert ist.

3. Lagervorrichtung nach Anspruch 2, **dadurch gekennzeichnet, dass** der Schmierkanal (K) getrennt von der Lagerschmierung des Wälzlagers (3) durch die Trennebene zwischen Gehäuse (1) und Adapter (2) geführt ist.

4. Lagervorrichtung nach Anspruch 3, **dadurch gekennzeichnet, dass** das Wälzlager (3) Zwischenringe (4,7) aufweist, durch welche das Schmiermittel vom Gehäuse (1) zum Adapter (2) hindurchgeführt wird.

5. Lagervorrichtung nach einem der Ansprüche 1 bis 4, **dadurch gekennzeichnet, dass** das Lager (3) auf dem Adapter (2) vorgespannt ist.

6. Lagervorrichtung nach Anspruch 5, **dadurch gekennzeichnet, dass** das Lager (3) mit einer Präzisionsspannmutter (8) auf dem Adapter (2) vorgespannt ist.

7. Lagervorrichtung nach einem der Ansprüche 1 bis 6, **dadurch gekennzeichnet, dass** ein Ausgang (38) des Schmierkanals (K) an einer Stirnseite (12) des Adapters (2) angeordnet ist, oder der Schmierkanal (K) einen radialen Ausgang zur Wälzschraubtriebmutter (M) aufweist.

8. Lagervorrichtung nach einem der Ansprüche 1 bis 7, **dadurch gekennzeichnet, dass** am Gehäuse (1) Schmieranschlüsse (18, 20,21,30) sowie Durchgänge (19,22,32) zur Schmierung des Lagers (3) zwischen Gehäuse (1) und Adapter (2) vorgesehen sind.
